# FASCICULE DE BREVET EUROPEEN

(11) **EP 3 453 685 B1**
(45) Date de publication et mention de la délivrance du brevet: **22.11.2023**
(21) Numéro de dépôt: 18161374.6
(22) Date de dépôt: 13.03.2018
(51) Int. Cl.: C03C 8/00, C03C 17/02, B23K 26/364, C03C 17/00, C03C 17/04, B44C 1/00, B44C 1/22

(54) **PANNEAU ÉMAILLÉ ET SA MÉTHODE D'OBTENTION**
EMAILLIERTE PLATTE UND DEREN HERSTELLUNGSMETHODE
GLAZED PANEL AND METHOD OF PRODUCING THE SAME

(30) Priorité: 11.09.2017 EP 17306166
(43) Date de publication de la demande: 13.03.2019
(73) Titulaire: Schott VTF (Societe Par Actions Simplifiee), 57870 Troisfontaines (FR)
(72) Inventeur: GASNIER, Sébastien, 57870 TROISFONTAINES (FR)
(74) Mandataire: Kessler, Marc

(56) Documents cités:
- EP-A1- 1 296 840
- DE-A1-102016 103 524

## Description

### Objet de l'invention

La présente invention a trait à un panneau émaillé, de préférence un panneau en verre recouvert d'émail, et porte également sur une méthode d'obtention d'un tel panneau.

### Etat de la technique

Les panneaux émaillés, qu'ils comprennent une plaque support en métal ou en verre, sont bien connus et leur utilisation est répandue dans de nombreux domaines. Les plaques métalliques émaillées sont généralement utilisées comme plaques publicitaires, éléments urbains, pour la signalisation des rues ou la décoration intérieure ou extérieure de bâtiments. Il est également habituel d'utiliser les plaques de verre émaillées pour la décoration de bâtiments. Elles peuvent également être utilisées pour la confection de paillasses de laboratoire, de plans de travail ou de crédences de cuisines, ou bien utilisées comme éléments de décoration d'appareils électroménagers ou comme vitrages automobiles.

L'émail est une matière vitreuse transparente ou opaque, généralement coloré et comprenant différents minéraux.

L'émaillage d'un support se fait habituellement, en appliquant une composition d'émail qui se trouve sous la forme d'une pâte, qui est ensuite fondue et vitrifiée sur le support par l'action de la chaleur.

Pour obtenir des panneaux émaillés dit « décoratifs », ou comprenant des motifs, des inscriptions, signes, logos ou images, il est possible de n'appliquer l'émail que sur une ou plusieurs portions du support, puis de recouvrir les parties du support restées nues, voir même la première couche d'émail elle-même, par une ou plusieurs autres couches d'émail d'encres ou de peintures, à l'aide de masques, selon une succession d'opérations de sérigraphie. Toutefois, cette méthode présente l'inconvénient d'être chronophage et peu aisée à mettre en oeuvre de par la répétition de nombreuses manipulations des masques ou des pochoirs.

Néanmoins, il est également possible de recouvrir d'émail la totalité du support, puis d'en supprimer certaines portions, par exemple par abrasion LASER, pour former le ou les motifs à représenter.

Par exemple, et pour des verres utilisés dans le domaine automobile, les documents WO0194128 et EP 1 296 840 décrivent l'abrasion LASER d'une portion d'émail déposée sur un support en verre, afin de le marquer d'un code d'identification.

Par ailleurs, pour des articles en verre, ou céramique de verre, pour appareils électroménagers, qui sont rétro éclairés, et dont la surface, opposée à l'utilisateur, est recouverte d'une couche sol-gel comprenant des particules inorganiques, le document DE102016103524 décrit la formation, dans la couche sol-gel, par ablation LASER, d'une cavité de forme trapézoïdale pour la formation de fenêtres lumineuses.

Pour ce qui concerne les supports en verre recouverts d'émail, il a été également proposé de remplir les zones découpées, les cavités ou gravures ainsi produites, par une encre, comme cela a été décrit, par exemple, dans le document FR2760202, pour l'élaboration de bandeaux de commande d'équipements électroménagers.

Toutefois, l'un des inconvénients majeurs de cette méthode est le remplissage incomplet, du ou des motifs gravé(s) par le matériau de remplissage, du fait de la consistance souvent épaisse et/ou de la nature de l'encre ou de l'émail de remplissage, qui se doit d'être compatible avec l'émail recouvrant le support en verre. Un remplissage incomplet rend les contours des motifs remplis peu nets, donnant une impression générale de flou, ce qui nuit au leur rendu esthétique final, mais nuit également à l'esthétique final du panneau qui comprend de tels motifs. Cet inconvénient est encore plus marqué pour des panneaux comprenant une épaisseur importante d'émail, c'est à dire entre 0,4 et 180 *µ*m.

### Buts de l'invention

La présente invention vise à fournir un panneau émaillé et une méthode de fabrication d'un tel panneau qui ne présentent pas les inconvénients de l'état de la technique.

La présente invention vise à fournir une alternative aux solutions de l'état de la technique existantes.

La présente invention vise à fournir un panneau émaillé décoratif dont le ou les motifs décoratifs ont un rendu esthétique final amélioré.

La présente invention vise également à fournir une méthode de fabrication d'un panneau émaillé qui soit rapide et aisée à mettre en oeuvre.

### Résumé de l'invention

La présente invention porte sur un panneau émaillé comprenant un support rigide comprenant au moins une surface, recouverte d'au moins une couche d'émail comprenant une ou plusieurs cavités pratiquée(s) dans tout ou partie de son épaisseur et comprenant au moins une paroi intérieure, la ou les cavité(s), ayant une section longitudinale de forme trapézoïdale ou sensiblement trapézoïdale, et étant remplie(s) d'un ou plusieurs matériaux de remplissage qui sont, ou comprennent, une ou plusieurs encres ou un ou plusieurs émaux.

Selon des modes préférés de l'invention, le panneau émaillé selon l'invention comprend au moins une, ou une combinaison quelconque appropriée, des caractéristiques suivantes :
- la ou les cavités a ou ont une section longitudinale ayant la forme d'un trapèze ou d'un trapèze rectangle,
- la ou les cavités, de section longitudinale de forme sensiblement trapézoïdale, comprend ou comprennent au moins une paroi intérieure comprenant un ou plusieurs gradins,
- la ou les cavités a ou ont une section transversale de forme ronde, ovoïde, ovale ou elliptique, de la forme d'un quadrilatère, d'un carré, d'un rectangle, d'un trapèze, d'un losange, d'un triangle ou d'un polygone,
- la ou les cavités est ou sont, ou bien forme(nt), un ou plusieurs caractères de l'alphabet et/ou un ou plusieurs chiffres et/ou symboles et/ou une ou plusieurs formes géométriques,
- le ou les matériaux de remplissage remplissent la ou les cavités jusqu'à effleurement de, et sensiblement sans débordement sur, la au moins une couche d'émail,
- le support est du verre,
- la au moins une couche d'émail a une épaisseur comprise entre 0,4 à 180 *µ*m.

La présente invention porte aussi sur l'utilisation du panneau émaillé selon l'invention comme élément décoratif d'un appareil électroménager.

La présente invention porte aussi sur une méthode de fabrication d'un panneau émaillé selon l'invention comprenant les étapes de prendre un support rigide comprenant au moins une surface et la recouvrir d'une ou plusieurs couches d'émail, ou prendre un support dont au moins une surface est déjà recouverte d'une ou plusieurs couches d'émail, de graver tout ou partie de la ou des couches d'émail pour former une ou plusieurs cavités ayant une section longitudinale de forme trapézoïdale ou sensiblement trapézoïdale de remplir la ou les cavités avec un ou plusieurs matériaux de remplissage étant, ou comprenant, une ou plusieurs encres et/ou un ou plusieurs émaux, et d'effectuer une trempe du panneau avant l'étape de remplissage de la ou des cavités, si le ou les matériaux de remplissage sont ou comprennent une ou plusieurs encres, ou après l'étape de remplissage si le ou les matériaux de remplissage sont ou comprennent un ou plusieurs émaux.

Selon des modes préférés de l'invention, la méthode selon l'invention comprend au moins une, ou une combinaison quelconque appropriée, des caractéristiques suivantes :
- la gravure de la ou des cavités est réalisée par ablation LASER,
- la gravure de la ou des cavités de section longitudinale sensiblement trapézoïdale met en oeuvre au moins un faisceau LASER, disposé perpendiculairement ou sensiblement perpendiculairement au-dessus de la au moins une couche d'émail, et gravant la au moins une couche d'émail par passes successives transversales,
- le au moins un faisceau LASER supprime au moins une première épaisseur de la au moins une couche d'émail sur une longueur et/ou largeur « Iₘ₁ » représentant entre 50 % et 150 % de plus que la longueur et/ou la largeur « Iₙₒₘ » du fond de la ou des cavités,
- le au moins un faisceau LASER supprime au moins une première épaisseur « eₘ₁ » de la au moins une couche d'émail représentant de 20 à 80% de la profondeur totale « e_{T} » de la ou des cavités,
- l'étape de remplissage de la ou des cavités avec un ou plusieurs matériaux de remplissage se fait jusqu'à effleurement de, et sensiblement sans débordement sur, la couche d'émail.

### Brève description des figures

La figure 1 est une représentation schématique d'une vue en coupe d'un premier mode de réalisation du panneau selon l'invention.
La figure 2 est une représentation schématique d'une vue en coupe d'un second mode de réalisation du panneau selon l'invention.
La figure 3 est une représentation schématique d'une vue en coupe du second mode de réalisation représenté à la figure 1, dans lequel la gravure pratiquée dans l'épaisseur de l'émail est remplie d'un matériau de remplissage.
La figure 4 est une représentation schématique d'une vue en coupe du panneau émaillé avant la gravure d'une cavité.
La figure 5 est une représentation schématique d'une vue en coupe d'une première étape de gravure pour l'élaboration d'un troisième mode de réalisation du panneau selon l'invention à partir du panneau représenté à la figure 4.
La figure 6 est une représentation schématique d'une vue en coupe d'une seconde étape de gravure pour l'élaboration du troisième mode de réalisation du panneau selon l'invention.
La figure 7 est une représentation schématique d'une vue en coupe d'une troisième étape de gravure pour l'élaboration du troisième mode de réalisation du panneau selon l'invention.
La figure 8 est une représentation schématique d'une vue en coupe du troisième mode de réalisation du panneau selon l'invention, dans lequel la gravure pratiquée dans l'épaisseur de l'émail est remplie d'un matériau de remplissage.
La figure 9 est une représentation schématique d'une vue en coupe d'un quatrième mode de réalisation du panneau selon l'invention.
La figure 10 est une représentation schématique d'une vue en coupe d'un cinquième mode de réalisation du panneau selon l'invention.

### Description détaillée de l'invention

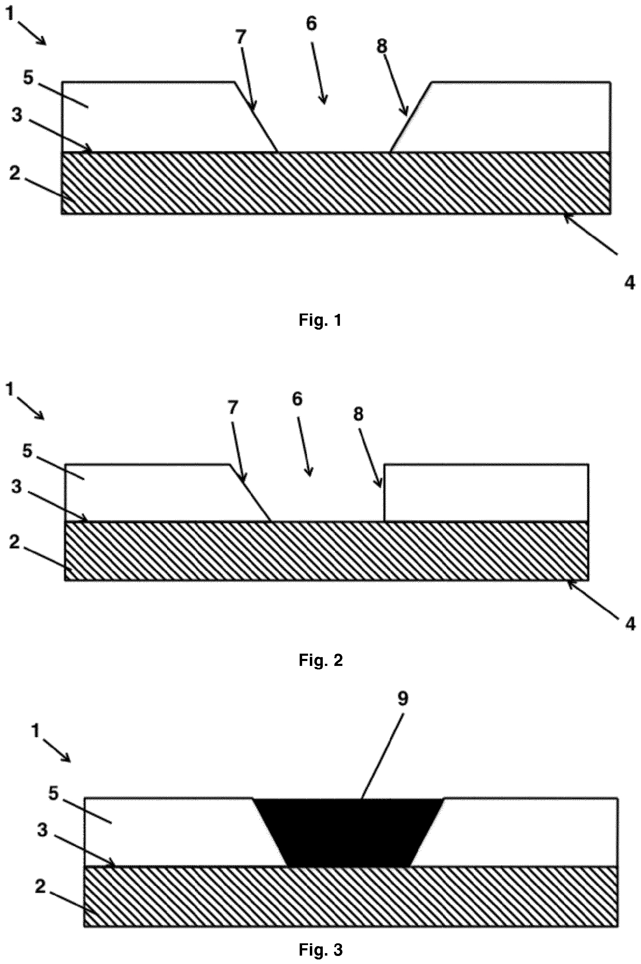

Dans la suite de la description et des revendications, les termes « haut », « bas », « supérieur », « inférieur », « vertical » ou « horizontal » font référence à la position horizontale du panneau selon l'invention, comme représenté aux figures 1 à 8.

Le panneau 1 selon la présente invention est rigide. Il est apte à supporter le poids d'un ou plusieurs objets posés sur au moins une de ces surfaces, sans fléchir sensiblement.

Le panneau 1 comprend un support 2, qui est rigide, sensiblement inflexible. Il présente une résistance mécanique à des sollicitations de flexion et/ou de torsion suffisant pour ne pas se déformer sous l'action d'une force de flexion et/ou de torsion. Le support 2 est sensiblement plan, et comprend au moins une première surface 3, continue et sensiblement plane, de préférence une seconde surface 4, continue et sensiblement plane, opposée à ladite première surface 3 (figure 1).

Le support 2 a une forme, une épaisseur et des dimensions adéquates et adaptées, ou compatibles, avec l'utilisation finale du panneau 1.

De préférence, le support 2 a une section transversale, donc dans le plan formé par la surface 2 ou la surface 3, de forme circulaire, elliptique ou bien parallélépipédique, avantageusement carrée ou rectangulaire. De préférence, le support 2 a une section longitudinale, donc dans un plan perpendiculaire au plan formé par la surface 2 ou la surface 3, parallélépipédique, avantageusement carrée ou rectangulaire, trapézoïdale, d'un trapèze ou d'un trapèze rectangle.

De préférence, le support 2 a une longueur comprise entre 300 et 755 mm, une largeur comprise entre 100 et 150mm, pour une épaisseur comprise entre 2 à 10 mm.

Le support 2 est fait d'un matériau inerte, de préférence au moins inerte physiquement et chimiquement, au(x) matériau(x) dont l'une ou les deux de ces surfaces 2 et 3 est/sont recouverte(s).

Le support 2 est de préférence transparent, semi-transparent ou opaque, ou bien partiellement transparent, semi-transparent ou opaque. Il peut être sablé et/ou sérigraphié et/ou coloré sur tout ou partie de l'une ou des deux surfaces 3 et 4.

De préférence, le support 2 est, ou comprend, du plastique, du verre, une matière cristalline ou semi-cristalline, une céramique ou une vitrocéramique.

Dans un mode de réalisation préféré de l'invention, le support 2 est du verre, de préférence, un verre sodocalcique transparent ou teinté dans la masse, éventuellement à couches diverses, telles que anti-bactériennes, antiréfléchissantes, par exemple du type connu sous la marque Matelux^{®}, chromées, à faible émissivité, par exemple du type connu sous le nom de Planibel Clear ou de Planibel low-E IsoComfort, commercialisé par la société AGC, ou un borosilicate par exemple connu sous la marque Borofloat^{®} 33. De préférence, le verre est à forte teneur en SiO₂, une teneur avantageusement comprise entre 69 % et 81 % en poids et avec une transmission lumineuse pouvant aller jusqu'à 90 %. Le verre peut avoir éventuellement préalablement subi un traitement thermique du type durcissement, recuit, trempe, bombage.

Le support 2 comprenant, sur l'une de ces surfaces 3 ou 4, de préférence sur ces deux surfaces 3 et 4, au moins une couche d'émail 5, de préférence une multitude de couches d'émail 5, déposée(s) par tous moyens adéquats sur le support 2 et sur la ou les couches inférieures d'émail. De préférence, l'épaisseur totale de la ou des couches d'émail est comprise entre 0,4 et 180 *µ*m, après séchage.

De préférence, la composition de la couche d'émail 5 est choisi en fonction de l'utilisation finale du panneau 1 selon l'invention et éventuellement également du ou des autres matériaux recouvrant, ou en contact avec la couche d'émail 5.

Dans un mode de réalisation particulier, la couche d'émail 5 est à base d'un medium, une fritte de verre borosilicate et un ou plusieurs pigments. De préférence, le médium est un composé ou ensemble de composées permettant notamment de diminuer la température de fusion et d'augmenter le coefficient de dilatation. Il peut comprendre du B₂O₃, du Na₂O, du K₂O, du Li₂O, du V₂O₅, ou un mélange quelconque de ces composés.

La couche d'émail 5 comprend au moins une, de préférence une multitude, de cavités 6, ou gravures, pratiquée(s) dans son épaisseur, une ou des cavités ouvertes vers l'extérieur à l'une de leur extrémité, leur fond étant constitué d'une partie de la couche d'émail 5 ou du support 2 nu, c'est-à-dire dénué d'émail 5.

Dans la présente description de l'invention, les termes « abraser » et « graver », et les termes « abrasion », « gravure » et « cavité » sont employés comme synonymes, et sont interchangeables. Ils signifient la suppression, ou sont la conséquence de la suppression, de tout ou partie de la couche d'émail 5 recouvrant un support 2 d'un panneau émaillé 1.

La ou les cavités 6 sont de toute forme et dimension adéquate, de préférence en rapport avec la forme et les dimensions du ou des motifs gravés dans l'épaisseur de la couche d'émail 5.

La ou les cavités 6 peuvent avoir une section transversale, dans le plan formé par la surface 2 ou la surface 3, donc à la surface 2 ou 3, de toute forme adéquate en relation avec le ou les motifs décoratifs à graver dans l'épaisseur de la couche d'émail 5. Cette section transversale peut être de forme ronde, ovoïde, ovale ou elliptique, de la forme d'un quadrilatère, d'un carré, d'un rectangle, d'un trapèze, d'un losange, d'un triangle ou d'un polygone, pour être, ou former, un ou plusieurs caractères de l'alphabet et/ou un ou plusieurs chiffres et/ou symboles et/ou une ou plusieurs formes géométriques.

Quelle que soit la forme de leur section transversale, cette dernière a une longueur ou une largeur qui est fonction des dimensions du ou des motifs à graver dans la couche d'émail 5.

La ou les cavités 6 présentent au moins une paroi intérieure, une paroi, qui dans une représentation en coupe longitudinale, donc dans l'épaisseur de la couche d'émail 5, fait apparaître au moins deux cotés opposés 7 et 8 (figures 1 à 9). Néanmoins s'agissant d'une cavité de forme ronde, ovoïde, ovale ou elliptique, il s'agit de deux cotés de la même paroi. Pour des formes de quadrilatères, de polygones, ou des formes plus complexes, les cotés 7 et 8 peuvent être soit ceux d'une même paroi ou soit des parois différentes, ces dernières pouvant être opposées ou adjacentes.

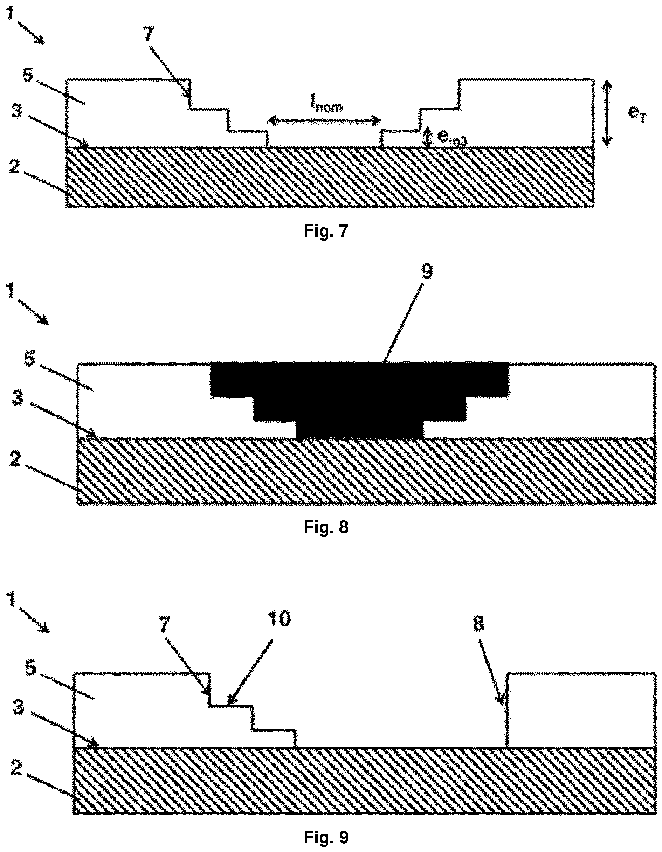

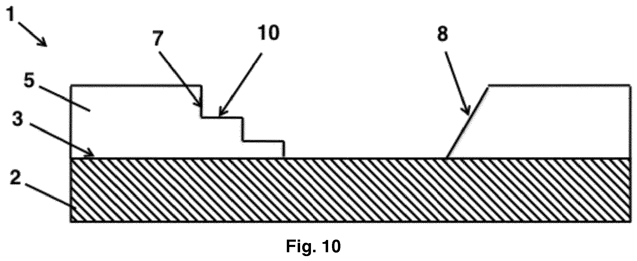

La ou les cavités 6 ont une section longitudinale, dans un plan perpendiculaire au plan formé par la surface 2 ou la surface 3, donc dans l'épaisseur de la couche d'émail 5, de forme trapézoïdale, d'un trapèze (figure 1) ou d'un trapèze rectangle (figure 2), ou de forme sensiblement trapézoïdale, sensiblement d'un trapèze (figures 7 et 10) ou sensiblement d'un trapèze rectangle (figure 9). Au moins une paroi intérieure ou partie de paroi intérieure, ou au moins une des parois intérieures de la ou des cavités 6, comprend un côté 7 ou 8 qui est droit, l'autre 8 ou 7 étant oblique et sensiblement continue (figure 2) ou sensiblement oblique (figure 9). De préférence, la paroi intérieure, ou partie de paroi intérieure, ou au moins une des parois intérieures, comprend des côtés 7 et 8 obliques et sensiblement continues (figure 1), ou deux côtés 7 et 8 sensiblement obliques (figures 7), ou bien l'un oblique et l'autre sensiblement oblique (figure 10).

De préférence, la forme sensiblement trapézoïdale de la section longitudinale de la ou des cavités 6, et donc la forme sensiblement oblique d'au moins une paroi intérieure, ou partie de paroi intérieure, ou au moins une des parois intérieures, est, comprend, ou prend la forme, d'un ou plusieurs gradins 10 ou marches d'escalier. Cela présente l'avantage de pouvoir mettre en oeuvre les méthodes et dispositifs classiques de gravure d'émail, en particulier mettant en oeuvre une ablation par LASER. Par ailleurs, cela permet de faire varier la hauteur des différentes gradins 10, ce qui présente les avantages d'avoir un aspect visuel sans effets d'ombres en regardant la face du support 2 non recouverte de la couche d'émail 5 et de faciliter le remplissage des cavités 6 en utilisant les méthodes classiques de sérigraphie pour le remplissage et/ou d'empilement de couches d'encres ou de peintures.

La section longitudinale trapézoïdale, ou sensiblement trapézoïdale, autrement dit la présence d'au moins une paroi intérieure, ou partie de paroi intérieure, ou une des parois intérieures obliques, ou sensiblement obliques, dans la ou des cavités 6, présente l'avantage d'un remplissage plus complet, de ladite ou desdites cavités 6, à l'aide d'un ou plusieurs matériau(x) de remplissage 9, en particulier une encre ou un autre émail, plus particulièrement une encore ou un autre émail ayant des propriétés chimiques et/ou physiques et/ou d'opérabilité, qui sont compatibles avec celles du support 2 et celles de la couche d'émail 5 recouvrant le support 2. Ce remplissage est également plus aisé, en particulier s'il met en oeuvre un procédé de sérigraphie, car cela permet l'utilisation d'une vitesse et d'une pression plus importante sans dégradation notable de la couche d'émail 5. Ainsi, le ou les motifs, constitués de, ou comprenant, la ou des cavités 6, et remplie(s) à l'aide du ou des matériaux, sont d'une netteté améliorée, procurent un rendu final du panneau 1 plus esthétique. Cet effet est d'autant plus marqué pour des couches d'émail 5 de forte épaisseur, allant jusqu'à 180 *µ*m.

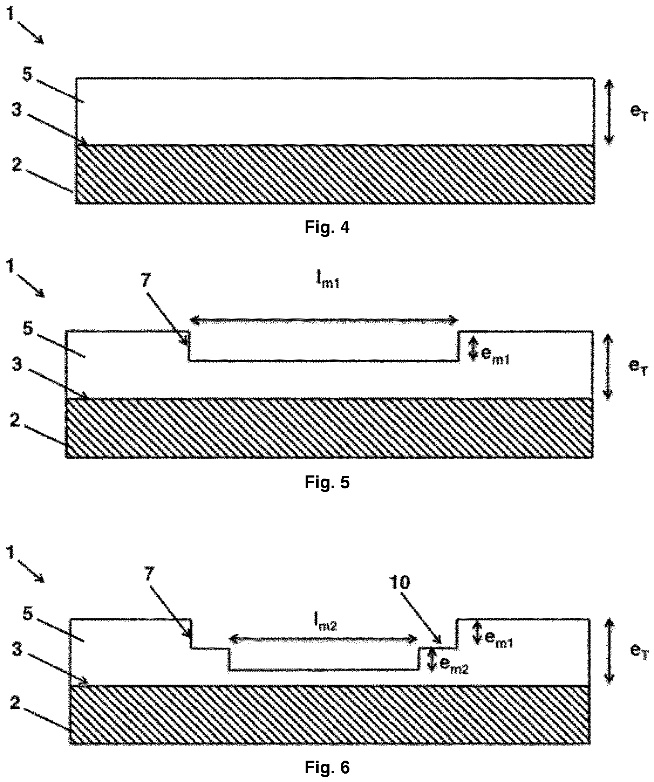

La ou les cavités 6 ont une profondeur qui dépend de l'épaisseur de l'émail 5, ou des couches d'émail 5, sur le support 2 (valeur « e_{T} » des figures 4 à 7). Si, par exemple, la couche d'émail 5 a une épaisseur « e_{T} » de 0,4 à 180 *µ*m, les cavités 6 peuvent être profondes de 0,4 à 180 *µ*m et atteindre la surface 3 ou 4 du support 2. Toutefois, les cavités 6 peuvent ne pas être creusées jusqu'au support 2, par conséquent, leur profondeur peut être inférieure à 0,4 *µ*m ou inférieur à 180 *µ*m.

Dans les modes de réalisation dans lesquels les cavités 6 ont au moins une paroi intérieure, ou partie de paroi intérieure, ou au moins une des parois en forme d'un ou plusieurs gradins, chaque hauteur de gradin « eₘ₁ », « eₘ₂ » ou « eₘᵢ », « i » représentant un nombre entier, et peut représenter 20 à 80 % de la profondeur totale des cavités 6 et donc éventuellement de l'épaisseur totale de la couche d'émail 5 « e_{T} ». De préférence, dans les modes de réalisation dans lesquels la au moins une paroi intérieure, ou partie de paroi intérieure, ou au moins une des parois comprend au moins deux gradins 10, la hauteur du première « eₘ₁ » représente de 20 à 40 % de la profondeur totale « e_{T} » de la cavité 6, et la hauteur du seconde « eₘ₂ » représente de 60 à 80 % de la profondeur totale « e_{T} » de la cavité 6. La dimension du fond de la cavité 6 (« Iₙₒₘ » de la figure 7) est, de préférence, comprise entre 0,1 et 50 mm. La longueur et/ou la largeur de l'ouverture la plus large, en partie supérieure de la couche d'émail 5 (« Iₘ₁ » de la figure 5), représente entre 50 % et 150 % de plus que la longueur et/ou la largeur « Iₙₒₘ » du fond de la cavité 6.

Dans un mode de réalisation particulier, le panneau 1 comprend une multitude de cavités 6 ayant la forme d'un tronc de cône inversé, cette multitude de cavités formant un motif gravé dans la couche d'émail 5.

Dans un mode de réalisation particulier des cavités 6 de section longitudinale sensiblement trapézoïdale, ces cavités 6 ont une profondeur « e_{T} » d'environ 92 *µ*m, pour une longueur d'ouverture « Iₘ₁ » d'environ 0,8 mm, une longueur de fond « Iₙₒₘ » d'environ 0,4 mm et au moins deux gradins, le première, en partie supérieure, ayant une hauteur « eₘ₁ » d'environ 31 *µ*m et le second une hauteur « eₘ₂ » d'environ 61 *µ*m.

Dans un second mode de réalisation particulier des cavités 6 de section longitudinale sensiblement trapézoïdale, les cavités 6 on une profondeur « e_{T} » d'environ 69 *µ*m, pour une longueur d'ouverture « Iₘ₁ » d'environ 0,6 mm, une longueur de fond « Iₙₒₘ » d'environ 0,4 mm et au moins deux gradins, le première, en partie supérieure, ayant une hauteur « eₘ₁ » d'environ 19 *µ*m et le second une hauteur « eₘ₂ » d'environ 50 *µ*m.

La ou les cavités 6 sont remplies d'un ou plusieurs matériaux de remplissage 9 qui comble(nt) partiellement, de préférence totalement, la ou les cavités 6, avantageusement jusqu'au raz, et donc jusqu'à effleurement, de la partie supérieure de la couche d'émail 5 recouvrant le support 2, sans déborder sensiblement sur la couche d'émail 5. En tout état de cause, le ou les matériaux de remplissage 9 ne remplit ou remplissent que la ou les cavités 6, sans recouvrir la partie de la couche d'émail 5 recouvrant le support 2 et ne comprenant pas de cavités 6.

Le ou les matériaux de remplissage 9 est une encre ou de l'émail, ou une combinaison d'encres et/ou d'émaux, ayant une consistance, une nature, des propriétés chimiques et/ou physiques et/ou d'opérabilité, qui sont compatibles avec celles du support 2 et celles de la couche d'émail 5 recouvrant le support 2.

De préférence, il s'agit d'un ou plusieurs émaux, qui peuvent être d'une composition identique ou proche de celle de la couche d'émail 5, à l'exception du type de pigment(s) qui confère une couleur, ou nuance de couleur, différente de celle de la couche d'émail 5. Il peut également s'agir d'une ou plusieurs encres, ou couches d'encres. De préférence, l'encre ou les encres sont à base d'époxy et comprennent une matière colorante, un pigment, représentant de 15 à 25 % en poids du poids total de l'encre, avantageusement finement divisée et maintenue en suspension dans un véhicule, une phase fluide, qui représente de préférence 70 % en poids du poids total de l'encre, et comprend un mélange de polymères, de diluants et/ou de solvants, et éventuellement un ou plusieurs additifs, représentant de préférence 5 à 15% en poids du poids total de l'encre, facilitant la mise en oeuvre de l'encre, choisis, par exemple, parmi des agents dispersants, des antimousses.

Le panneau 1 rigide selon l'invention peut être utilisé dans le domaine de l'aménagement intérieur ou extérieur ou des équipements sanitaires. De préférence, il est utilisé dans le domaine des appareils électroménagers, comme élément décoratif d'un appareil électroménager, avantageusement comme bandeau ou porte de cuisinières, de fours ou de réfrigérateurs.

La présente invention a également pour objet une méthode de réalisation d'un panneau 1 rigide selon l'invention.

La méthode selon l'invention comprend la fourniture d'un support 2, tel que décrit précédemment, puis l'application d'une ou plusieurs couches d'émail 5 sur tout ou partie d'une surface 3 ou 4, ou sur les deux surfaces 3 et 4, du support 2, ou bien de prendre un support 2 déjà revêtu d'une ou plusieurs couches d'émail 5. La ou les couches d'émail 5, et l'émail ou les émaux, sont de préférences celles décrites précédemment.

L'application, ou l'application préalable, de la couche d'émail 5 peut se faire par toute méthode adéquate, par exemple par sérigraphie, par tampographie, par offset, par impression digitale ou par jet d'encre.

Ensuite, la méthode comprend une étape de réalisation, à l'aide de moyens de gravure, d'une ou plusieurs cavités 6 de section longitudinale de forme trapézoïdale, d'un trapèze ou d'un trapèze rectangle, ou de forme sensiblement trapézoïdale, sensiblement d'un trapèze ou sensiblement d'un trapèze rectangle, telles que décrites précédemment. De préférence, la réalisation de la ou des cavités 6 se fait après le séchage de la couche d'émail 5.

De préférence, les moyens de gravure comprennent, ou mettent en oeuvre, les moyens d'un usinage traditionnel, comme par exemple des moyens de perçage, d'électroérosion ou d'ablation par ultrasons.

De préférence, cette étape comprend ou est réalisée par ablation LASER, qui présente l'avantage d'obtenir une gravure de la couche d'émail 5 très fine, avec un minimum d'altération du support 2.

Quel que soit le mode de gravure, et en particulier pour une ablation, LASER les moyens de gravure, en particulier le faisceau LASER, et le panneau 1 émaillé peuvent être fixes, mobiles en rotation ou translation l'un par rapport à l'autre, ou mobiles en rotation ou translation les deux de façon concomitante, durant la gravures de la cavité 6 ou des cavités 6.

Dans le mode de réalisation mettant en oeuvre l'ablation LASER, la au moins une paroi intérieure, ou partie de paroi intérieure, ou au moins une des parois intérieures, qui est oblique, peut être obtenue par l'emploi d'un ou plusieurs faisceaux LASER, mobiles ou fixes, attaquant la surface de la couche d'émail 5 selon un angle oblique, ou sensiblement oblique. Pour des cavités 6 de section longitudinale ayant la forme d'un trapèze rectangle, le côté 7 ou 8 de la paroi intérieure, ou partie de paroi intérieure qui n'est pas oblique, mais droit, peut être réalisée par le même faisceau LASER pivotant de la position oblique ou sensiblement oblique à une position perpendiculaire ou sensiblement perpendiculaire à la surface 2 ou 3 de la couche d'émail 5. Il est également envisageable d'employer un premier faisceau LASER oblique ou sensiblement oblique et un second faisceau LASER perpendiculaire ou sensiblement perpendiculaire à la surface 2 ou 3 de la couche d'émail 5.

L'ablation LASER est préférée pour la réalisation de cavités 6 à section longitudinale sensiblement trapézoïdale, en particulier pour une section en forme de gradins 10 ou marches d'escalier, car il est possible d'employer les dispositifs et systèmes classiques d'ablation LASER, utilisant ou mettant en oeuvre un ou plusieurs faisceaux LASER permettant de graver la surface 2 ou 3 de la couche d'émail 5 perpendiculairement ou sensiblement perpendiculairement. De plus, cette ablation LASER permet de graver les gradins 10 des cavités 6 avec une grande flexibilité et une grande finesse. Les passes successives du faisceau LASER transversalement, au-dessus de la zone d'émail 5 à graver et/ou les passes successives transversales de la zone d'émail 5 à graver sous le faisceau LASER, permettent de graver, de supprimer, une ou plusieurs épaisseurs identiques ou différentes d'émail 5, avec des longueurs et/ou largeurs de gravure différentes, avantageusement décroissantes. Les gradins 10 ou marches d'escalier, ainsi réalisés, peuvent avoir des dimensions suffisamment petites afin de s'approcher d'une paroi intérieure, ou partie d'une paroi intérieure, oblique continue.

De préférence, dans ce mode de réalisation, un premier passage du faisceau LASER sur la couche d'émail 5 et/ou de la couche d'émail 5 sous le faisceau LASER, supprime une première épaisseur, une première partie supérieure, de la couche d'émail 5, sur une longueur et/ou largeur « Iₘ₁ » plus importante que la longueur et/ou la largeur « Iₙₒₘ » du fond de la cavité 6. Ensuite, un second passage, ou multitude d'autres passages, du faisceau LASER et/ou sous le faisceau LASER, supprime une seconde épaisseur, ou multitude d'épaisseurs sur une longueur et/ou largeur inférieure à « Iₘ₁ », mais supérieure à « Iₙₒₘ », pour finir par une dernière passe du faisceau LASER supprimant la longueur et/ou la largeur nominale de la gravure, de préférence jusqu'au support 2.

De préférence, la ou les couches d'émail 5, préalablement déposée sur le support 2, est séchée avant l'étape de gravure de la ou des cavités 6, ce qui présente l'avantage de graver une surface stable et à l'état solide, ce qui permet d'avoir une définition nette des formes gravées sur la face opposée à la couche d'émail 5.

Avantageusement, la ou les couches d'émail 5 gravées subissent ensuite une étape de trempe, à savoir un chauffage puis un refroidissement rapide, ce qui présente l'avantage de vitrifier la couche d'émail 5 sur le support 2 et de figer définitivement cette couche d'émail 5 ainsi que les cavités 6 qui y sont présentes.

A titre d'exemple, l'étape de trempe est réalisée par chauffage à une température comprise entre 650°C et 750°C, pendant une période comprise entre 1 minute et 10 minutes, de préférence entre 2 et 5 minutes, puis par un refroidissement rapide, entre 30 secondes et 5 minutes, à une température passant dans ce lapse de temps de 450°C à 60°C.

La ou les cavités 6 sont ensuite remplies d'un ou plusieurs matériaux de remplissage 9, tels que décrits précédemment, le remplissage étant partiel ou de préférence total, avantageusement jusqu'à affleurer la partie supérieure de la couche d'émail 5 recouvrant le support 2, sans déborder sensiblement sur la couche d'émail 5, en tout état de cause, sans recouvrir la partie de la couche d'émail 5 ne comprenant pas de cavités 6.

Dans les modes de réalisation dans lesquels le matériau de remplissage 9 est un émail ou des émaux, l'étape de trempe s'effectue, de préférence, après l'étape de remplissage de la ou des cavités 6.

L'étape de remplissage de la ou des cavités 6 peut être réalisée par sérigraphie, tampographie ou impression, par exemple par l'emploi d'une imprimante à jet d'encre ou jet d'émail.

La méthode peut comprendre en outre une étape préalable de détermination de la forme et dimensions du ou des motifs à graver dans la couche d'émail 5.

La méthode peut comprendre en outre une étape préalable de paramétrage du dispositif mis en oeuvre pour réaliser la gravure, les cavités 6, de la couche d'émail 5 du panneau 1, en fonction de la forme et dimensions du ou des motifs à graver et/ou du nombre de couches de la couche d'émail 5, de l'épaisseur totale de la couche d'émail 5 et de la matière qui la compose.

A titre d'exemple, la méthode selon l'invention met en oeuvre une machine composée d'une source laser infrarouge, de longueur d'onde de 1064 nm, d'un système de positionnement par caméra, d'un système de convoyage avec sas, pour éviter tout risque lié au faisceau LASER, et de moyens informatiques, par exemple deux ordinateurs, et des moyens logiciels, pour le contrôle de moyens de positionnement des panneaux émaillés à traiter et à la source LASER. De préférences les moyens informatiques comprennent également des moyens logiciels permettant de contrôler le LASER afin de réaliser le ou les motifs à graver.

De préférence, la fréquence du faisceau LASER est comprise entre 2500 et 45000 kHz, sa puissance est comprise entre 5 et 100 W, la largeur du faisceau est comprise entre 0,10 et 0,05 mm, la direction de balayage pouvant varier entre, et adopter les positions : horizontale, verticale, angle de 45° et angle de 135°, avec un décalage de la direction de balayage du faisceau entre deux passages du LASER successives de 0°, 45°, 90°, 135°, et un nombre de passages du faisceau LASER compris entre un et quinze pour une épaisseur de couche d'émail 5 d'environ 200 *µ*m.

## Revendications

1. Panneau (1) émaillé comprenant un support (2) rigide, ledit support (2) comprenant au moins une surface (3 ou 4) recouverte d'au moins une couche d'émail (5) comprenant une ou plusieurs cavités (6), pratiquée(s) dans tout ou partie de son épaisseur et comprenant au moins une paroi intérieure, ladite ou lesdites cavité(s) (6) ayant une section longitudinale de forme trapézoïdale ou sensiblement trapézoïdale, et étant remplie(s) d'un ou plusieurs matériaux de remplissage (9) qui sont, ou comprennent, une ou plusieurs encres ou un ou plusieurs émaux.

2. Le panneau (1) selon la revendication 1, dans lequel la ou les cavités (6) a ou ont une section longitudinale ayant la forme d'un trapèze ou d'un trapèze rectangle.

3. Le panneau (1) selon la revendication 1, dans lequel la ou les cavités (6), de section longitudinale de forme sensiblement trapézoïdale comprend, ou comprennent, au moins une paroi intérieure comprenant un ou plusieurs gradins (10).

4. Le panneau (1) selon l'une quelconque des revendications précédentes, dans lequel la ou les cavités (6) a ou ont une section transversale de forme ronde, ovoïde, ovale ou elliptique, de la forme d'un quadrilatère, d'un carré, d'un rectangle, d'un trapèze, d'un losange, d'un triangle ou d'un polygone.

5. Le panneau (1) selon l'une quelconque des revendications précédentes, dans lequel la ou les cavités (6) est ou sont, ou bien forme(nt), un ou plusieurs caractères de l'alphabet et/ou un ou plusieurs chiffres et/ou symboles et/ou une ou plusieurs formes géométriques.

6. Le panneau (1) selon l'une quelconque des revendications précédentes, dans lequel le ou les matériaux de remplissage (9) remplissent la ou les cavités (6) jusqu'à effleurement de, et sensiblement sans débordement sur, la au moins une couche d'émail (5).

7. Le panneau (1) selon l'une quelconque des revendications précédentes, dans lequel le support (2) est du verre.

8. Le panneau (1) selon l'une quelconque des revendications précédentes, dans lequel la au moins une couche d'émail (5) a une épaisseur comprise entre 0,4 à 180 *µ*m.

9. Utilisation du panneau (1) émaillé selon l'une quelconque des revendications précédentes comme élément décoratif d'un appareil électroménager.

10. Méthode de fabrication d'un panneau (1) rigide émaillé comprenant les étapes suivantes :
- prendre un support (2) rigide comprenant au moins une surface (3 ou 4) et la recouvrir d'une ou plusieurs couches d'émail (5), ou prendre un support (2) dont ladite au moins une surface (3 ou 4) est déjà recouverte d'une ou plusieurs couches d'émail (5),
- graver tout ou partie de ladite ou desdites couches d'émail (5) pour former une ou plusieurs cavités (6) ayant une section longitudinale de forme trapézoïdale ou sensiblement trapézoïdale
- remplir ladite ou lesdites cavités (6) avec un ou plusieurs matériaux de remplissage (9) étant, ou comprenant, une ou plusieurs encres et/ou un ou plusieurs émaux
- effectuer une trempe du panneau (1) avant l'étape de remplissage de ladite ou desdites cavités (6) si ledit ou lesdits matériaux de remplissage (9) sont ou comprennent une ou plusieurs encres, ou après ladite étape de remplissage si ledit ou lesdits matériaux de remplissage (9) sont ou comprennent un ou plusieurs émaux.

11. Méthode selon la revendication 10, dans laquelle la gravure de la ou des cavités (6) est réalisée par ablation LASER.

12. Méthode selon la revendication 11, dans laquelle la gravure de la ou des cavités (6) de section longitudinale sensiblement trapézoïdale met en oeuvre au moins un faisceau LASER, disposé perpendiculairement ou sensiblement perpendiculairement au-dessus de la au moins une couche d'émail (5), et gravant ladite au moins une couche d'émail (5) par passes successives transversales.

13. Méthode selon la revendication 12, dans laquelle le au moins un faisceau LASER supprime au moins une première épaisseur de la au moins une couche d'émail (5) sur une longueur et/ou largeur « Iₘ₁ » représentant entre 50 % et 150 % de plus que la longueur et/ou la largeur « Iₙₒₘ » du fond de la ou des cavités (6).

14. Méthode selon la revendication 12, dans laquelle le au moins un faisceau LASER supprime au moins une première épaisseur « eₘ₁ » de la au moins une couche d'émail (5) représentant de 20 à 80% de la profondeur totale « e_{T} » de la ou des cavités (6).

15. Méthode selon l'une quelconque des revendications précédente, dans laquelle l'étape de remplissage de la ou des cavités (6) avec un ou plusieurs matériaux de remplissage (9) se fait jusqu'à effleurement de, et sensiblement sans débordement sur, la couche d'émail (5).

## Patentansprüche

1. Emaillierte Platte (1), umfassend einen starren Träger (2), der Träger (2) umfassend mindestens eine Oberfläche (3 oder 4), die mit mindestens einer Emailleschicht (5) bedeckt ist, die eine oder mehrere Vertiefungen (6) umfasst, die in ihrer gesamten Stärke oder einem Teil davon ausgebildet sind und umfassend mindestens eine Innenwand, wobei der oder die Hohlräume (6) einen trapezförmigen oder im Wesentlichen trapezförmigen Längsschnitt aufweisen und mit einem oder mehreren Füllmaterialien (9) gefüllt sind, die eine oder mehrere Tinten oder eine oder mehrere Emaillen sind oder umfassen.

2. Die Platte (1) nach Anspruch 1, wobei die Vertiefung(en) (6) einen Längsschnitt in Form eines Trapezes oder eines rechtwinkligen Trapezes aufweisen.

3. Die Platte (1) nach Anspruch 1, wobei die Vertiefung(en) (6) mit einem im Wesentlichen trapezförmigen Längsschnitt mindestens eine Innenwand mit einer oder mehreren Abstufungen (10) umfassen.

4. Die Platte (1) nach einem der vorherigen Ansprüche, wobei die Vertiefung(en) (6) einen runden, eiförmigen, ovalen oder elliptischen Querschnitt in Form eines Vierecks, Quadrats, Rechtecks, Trapezes, einer Raute, eines Dreiecks oder eines Polygons aufweisen.

5. Die Platte (1) nach einem der vorherigen Ansprüche, wobei die Vertiefung(en) (6) ein oder mehrere Zeichen des Alphabets und/oder eine oder mehrere Zahlen und/oder Symbole und/oder eine oder mehrere geometrische Formen sind oder bilden.

6. Die Platte (1) nach einem der vorherigen Ansprüche, wobei das oder die Füllmaterialien (9) die Vertiefung(en) (6) bis zum Berühren mit und im Wesentlichen ohne Überlauf über die mindestens eine Emailleschicht (5) ausfüllen.

7. Die Platte (1) nach einem der vorherigen Ansprüche, wobei der Träger (2) aus Glas ist.

8. Die Platte (1) nach einem der vorherigen Ansprüche, wobei die mindestens eine Emailleschicht (5) eine Stärke zwischen 0,4 und 180 µm umfasst.

9. Verwendung der emaillierten Platte (1) nach einem der vorherigen Ansprüche als dekoratives Element eines Haushaltsgeräts.

10. Verfahren zur Herstellung einer emaillierten starren Platte (1), umfassend die folgenden Schritte:
- Nehmen eines starren Trägers (2), der mindestens eine Oberfläche (3 oder 4) aufweist, und diese Überziehen mit einer oder mehreren Emailleschichten (5), oder Nehmen eines Träger (2), bei dem die mindestens eine Oberfläche (3 oder 4) bereits mit einer oder mehreren Emailleschichten (5) überzogen ist,
- Gravieren der gesamten oder eines Teils der Emailleschicht(en) (5), um eine oder mehrere Vertiefungen (6) mit einem trapezförmigen oder im Wesentlichen trapezförmigen Längsschnitt zu bilden
- Füllen der Vertiefung(en) (6) mit einem oder mehreren Füllmaterialien (9), die eine oder mehrere Tinten und/oder eine oder mehrere Emaillen sind oder umfassen
- Durchführen eines Abschreckens der Platte (1) vor dem Schritt eines Füllens der Vertiefung(en) (6), wenn das Füllmaterial oder die Füllmaterialien (9) eine oder mehrere Tinten sind oder umfassen, oder nach dem Schritt eines Füllens, wenn das Füllmaterial oder die Füllmaterialien (9) eine oder mehrere Emaillen sind oder umfassen.

11. Verfahren nach Anspruch 10, wobei das Gravieren der Vertiefung(en) (6) durch LASER-Ablation erfolgt.

12. Verfahren nach Anspruch 11, wobei zum Gravieren der Vertiefung(en) (6) mit im Wesentlichen trapezförmigem Längsschnitt mindestens ein LASER-Strahl verwendet wird, der senkrecht oder im Wesentlichen senkrecht über der mindestens einen Emailleschicht (5) angeordnet ist und die mindestens eine Emailleschicht (5) in aufeinanderfolgenden Querdurchgängen graviert.

13. Verfahren nach Anspruch 12, wobei der mindestens eine LASER-Strahl mindestens eine erste Stärke der mindestens einen Emailleschicht (5) über eine Länge und/oder Breite "Iₘ₁" entfernt, die zwischen 50 % und 150 % mehr als die Länge und/oder Breite "Iₙₒₘ" des Bodens der Vertiefung(en) (6) ist.

14. Verfahren nach Anspruch 12, wobei der mindestens eine LASER-Strahl mindestens eine erste Stärke "eₘ₁" der mindestens einen Emailleschicht (5) entfernt, die 20 bis 80 % der Gesamttiefe "e_{T}" der Vertiefung(en) (6) darstellt.

15. Verfahren nach einem der vorherigen Ansprüche, wobei der Schritt eines Füllens der Vertiefung(en) (6) mit einem oder mehreren Füllmaterialien (9) bis zur Berührung der Emailleschicht (5) und im Wesentlichen ohne Überlaufen über diese erfolgt.

## Claims

1. Enameled panel (1) comprising a rigid support (2), said support (2) comprising at least one surface (3 or 4) covered with at least one layer of enamel (5) comprising one or several cavities (6), formed in all or part of its thickness and comprising at least one inner wall, said cavity or cavities (6) having a trapezoidal or substantially trapezoidal longitudinal section, and being filled with one or several filler materials (9) which are, or comprise, one or several inks or one or several enamels.

2. The panel (1) according to claim 1, wherein the cavity or cavities (6) has or have a longitudinal section in the form of a trapezoid or a right-angled trapezoid.

3. The panel (1) according to claim 1, wherein the cavity or cavities (6), of substantially trapezoidal longitudinal section, comprise(s) at least one inner wall comprising one or several steps (10).

4. The panel (1) according to any one of the preceding claims, wherein the crosssection of the cavity or cavities (6) is round, ovoid, oval, elliptical, in the shape of a quadrilateral, a square, a rectangle, a trapezoid, a diamond, a triangle or a polygon.

5. The panel (1) according to any one of the preceding claims, wherein the cavity or cavities (6) is or are, or form(s), one or several letters of the alphabet and/or one or several numbers and/or symbols and/or one or several geometric shapes.

6. The panel (1) according to any one of the preceding claims, wherein the filler material(s) (9) fill the cavity or cavities (6) until becoming flush with, and substantially without overflowing onto, the at least one layer of enamel (5).

7. The panel (1) according to any one of the preceding claims, wherein the support (2) is glass.

8. The panel (1) according to any one of the preceding claims, wherein the at least one layer of enamel (5) has a thickness of between 0.4 to 180 µm.

9. Use of the enameled panel (1) according to any one of the preceding claims as decorative element of a household appliance.

10. Method of manufacturing an enameled rigid panel (1) comprising the following steps:
- taking a rigid support (2) comprising at least one surface (3 or 4) and covering it with one or several layers of enamel (5), or taking a support (2) whereof said at least one surface (3 or 4) is already covered with one or several layers of enamel (5),
- etching all or part of said layer(s) of enamel (5) to form one or several cavities (6) having a trapezoidal or substantially trapezoidal longitudinal section,
- filling said cavity or cavities (6) with one or several filler material(s) (9) which are, or comprise, one or several inks and/or one or several enamels,
- tempering the panel (1) before the step of filling said cavity or cavities (6) if said filler material(s) (9) are or comprise one or several inks, or after said filling step if said filler material(s) (9) are or comprise one or several enamels.

11. Method according to claim 10, wherein the etching of the cavity or cavities (6) is done by LASER ablation.

12. Method according to claim 11, wherein the etching of the cavity or cavities (6) of substantially trapezoidal longitudinal section implements at least one LASER beam, arranged perpendicularly or substantially perpendicularly above the at least one layer of enamel (5), and etching said at least one layer of enamel (5) by successive transverse passes.

13. Method according to claim 12, wherein the at least one LASER beam eliminates at least a first thickness of the at least one layer of enamel (5) over a length and/or a width "Iₘ₁" representing between 50% and 150% more than the length and/or the width "Iₙₒₘ" of the bottom of the cavity or cavities (6).

14. Method according to claim 12, wherein the at least one LASER beam eliminates at least a first thickness "eₘ₁" of the at least one layer of enamel (5) representing from 20 to 80% of the total depth "e_{T}" of the cavity or cavities (6).

15. Method according to any one of the preceding claims, wherein the step of filling a cavity or cavities (6) with one or several filler material(s) (9) is done until becoming flush with, and substantially without overflowing onto, the layer of enamel (5).
